Europäisches Patentamt

European Patent Office

Office européen des brevets

(19)

(11) Numéro de publication : **0 097 084**
**B1**

# (12) FASCICULE DE BREVET EUROPÉEN

(45) Date de publication du fascicule du brevet :
07.05.86

(21) Numéro de dépôt : 83401136.3

(22) Date de dépôt : 03.06.83

(51) Int. Cl.⁴ : **F 02 G   1/044**, F 02 G   1/053,
**F 16 J 15/52**

(54) **Machine à cycle de Stirling.**

(30) Priorité : 04.06.82 FR 8209776

(43) Date de publication de la demande :
28.12.83 Bulletin 83/52

(45) Mention de la délivrance du brevet :
07.05.86 Bulletin 86/19

(84) Etats contractants désignés :
**AT BE CH DE FR GB IT LI LU NL SE**

(56) Documents cités :
**DE-A- 2 730 187**
**DE-C-   491 226**
**FR-A-   941 997**
**FR-A- 2 194 281**
**FR-A- 2 360 018**
**US-A- 1 807 139**
**US-A- 3 164 389**
**US-A- 4 152 945**

(73) Titulaire : **CREUSOT-LOIRE**
**42 rue d'Anjou**
**F-75008 Paris (FR)**

(72) Inventeur : **Chauveton, Claude**
**Rivel**
**F-11230 Chalabre (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

**Description**

La présente invention concerne les machines utilisant un fluide de travail soumis à une évolution thermo-dynamique correspondant au cycle de Stirling. Ces machines sont généralement utilisées, soit comme machines motrices transformant une énergie calorifique en énergie mécanique, soit comme pompe à chaleur ou comme machine frigorifique.

Il est connu de réaliser une machine à cycle de Stirling constituée de quatre pistons à double effet, à mouvement alternatif, reliés cinématiquement à un ou plusieurs arbres tournants. Dans de telles machines, le fluide de travail est transvasé cycliquement d'une chambre de travail à une autre, en passant successivement à travers une source chaude, un échangeur régénérateur, et une source froide. Le fluide de travail n'est jamais renouvelé et doit par conséquent conserver indéfiniment ses caractéristiques. Dans de telles machines, il est nécessaire de prévoir des dispositifs d'étanchéité permettant d'éviter toute souillure du fluide de travail, et notamment d'éviter toute introduction de matières lubrifiantes dans ce fluide de travail, ce qui colmaterait l'échangeur régénérateur et diminuerait le coefficient d'échange thermique avec les sources chaudes et froides.

Pour éviter une telle souillure du fluide de travail, on pourrait concevoir une machine entièrement dépourvue d'organes mécaniques lubrifiés, mais une telle solution serait peu satisfaisante, étant donné la complexité de la transmission mécanique nécessaire pour transformer le mouvement alternatif des pistons en mouvement rotatif de l'arbre de sortie de la machine. Comme, d'autre part, il est pratiquement impossible de réaliser une étanchéité totale entre un cylindre et un piston à mouvement relatif linéaire et alternatif, il a été envisagé des dispositifs d'étanchéité positive, c'est-à-dire utilisant un élément déformable qui constitue un barrage absolu au passage du gaz de travail. Ces dispositifs d'étanchéité positive n'ont toutefois pas donné entière satisfaction à cause de problèmes d'accélération et de création de différences de pression variables de part et d'autre des dispositifs d'étanchéité, ce qui entraine leur détérioration rapide. On peut citer le brevet US-A-4 152 945 décrivant une machine à cycle de Stirling comprenant essentiellement un carter dans lequel sont montés un arbre tournant, trois pistons double effet disposés dans trois cylindres de travail disposés parallèlement autour de l'arbre, et une transmission mécanique transformant le mouvement alternatif des pistons en mouvement de rotation. L'étanchéité entre l'espace du carter contenant la transmission mécanique et les cylindres de travail est assurée par des joints toriques classiques. Ces types de dispositifs d'étanchéité par frottement ne sont pas d'une efficacité absolue et au bout d'un certain temps, les corps gras de la transmission mécanique parviennent à souiller le fluide de travail.

La présente invention vise une machine à cycle de Stirling dont l'agencement permet de remédier aux inconvénients précédemment cités.

L'invention concerne plus particulièrement une machine à cycle de Stirling comprenant essentiellement un carter dans lequel sont montés un arbre tournant, au moins trois cylindres de travail disposés parallèlement autour de l'arbre, un piston double effet dans chacun desdits cylindres, et une transmission mécanique transformant le mouvement alternatif des pistons en mouvement de rotation de l'arbre, constituée d'un plateau oscillant immobile en rotation, à mouvement orbital, dont l'axe décrit une surface conique autour de l'arbre tournant, et de liaisons articulées reliant chaque piston au plateau oscillant.

Une caractéristique essentielle de l'invention réside dans le fait que ledit carter de la machine ménage une première chambre dans laquelle est monté l'arbre tournant, et une seconde chambre dans laquelle se trouvent les liaisons articulées reliant chaque piston au plateau oscillant, et par le fait qu'un joint élastique est interposé entre le carter et le plateau oscillant de façon à empêcher toute communication entre la première chambre et la seconde chambre, et par le fait que chacune des liaisons articulées est montée dans un logement d'une pièce liée rigidement au piston, l'espace contenu dans ce logement étant isolé de la seconde chambre par des joints élastiques reliant le plateau oscillant, au voisinage de la liaison correspondante et la pièce reliée au piston correspondant.

D'autres caractéristiques et avantages de l'invention apparaîtront lors de la description détaillée de l'exemple de réalisation qui va suivre, illustré par les dessins annexés.

La figure 1 est une vue schématique, en coupe longitudinale, d'une machine conforme à l'invention.

La figure 2 représente schématiquement le fonctionnement thermodynamique d'une machine conforme à l'invention.

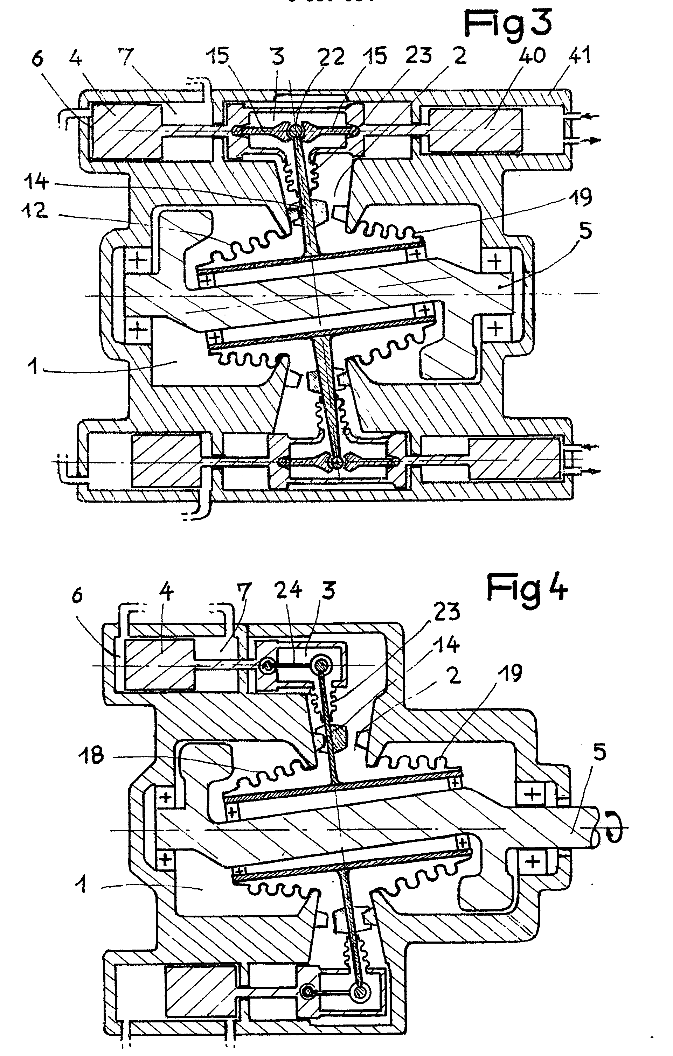

. La figure 3 est une vue schématique en coupe longitudinale d'une variante de machine conforme à l'invention.

La figure 4 est une vue schématique en coupe longitudinale d'une autre variante de machine conforme à l'invention.

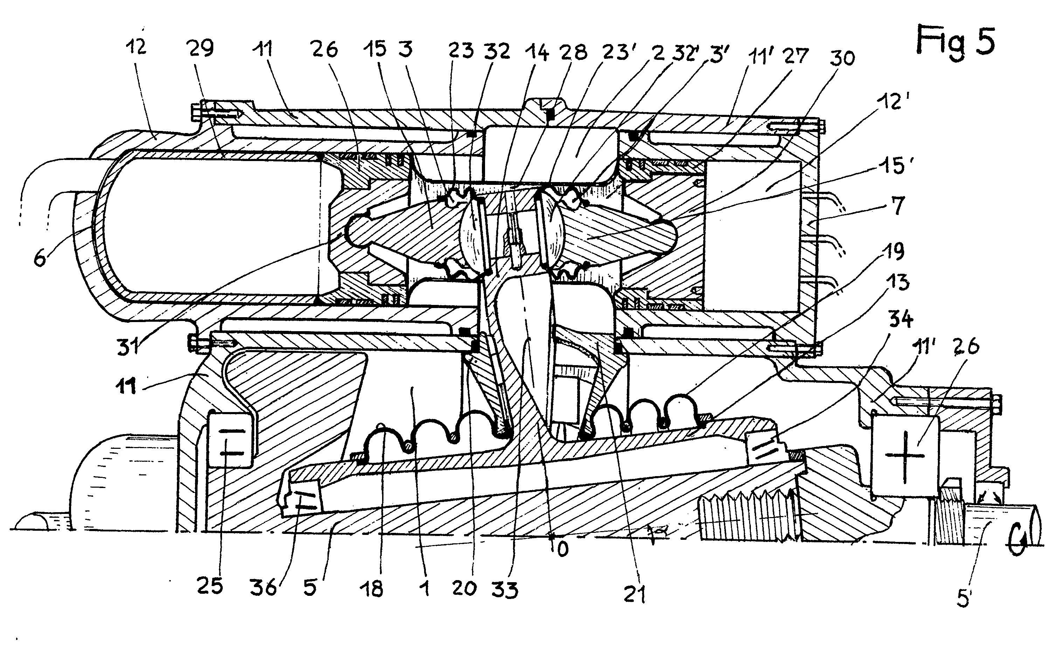

La figure 5 est une vue en coupe longitudinale d'une machine conforme à l'invention, selon un mode préféré de réalisation.

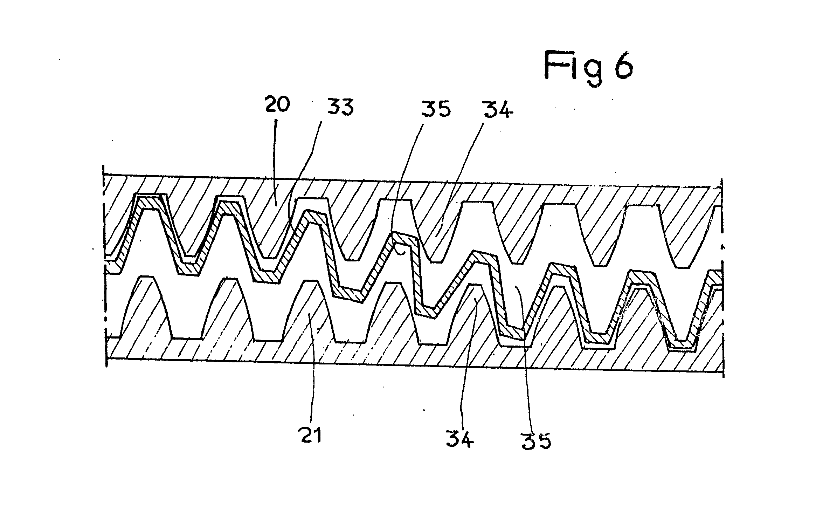

La figure 6 est une section développée au niveau A-A, s'étendant sur un demi-tour.

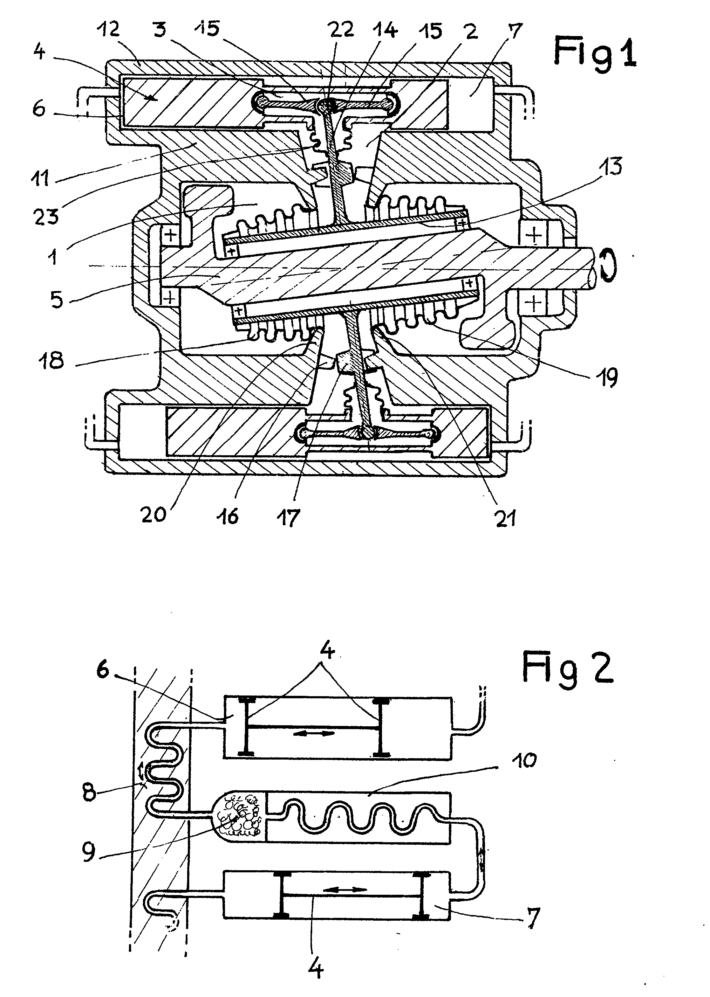

En se reportant aux figures 1 et 2, nous allons décrire brièvement le principe de fonctionnement, connu en soi, d'une machine à cycle de Stirling à laquelle la présente invention est applicable.

Cette machine à cycle de Stirling est essentiellement constituée d'au moins trois pistons à double effet 4 disposés symétriquement et parallèlement autour de l'axe d'un arbre tournant central 5. En règle générale, ces pistons 4 sont au nombre de quatre. Dans ce cas, ces pistons 4 sont animés d'un mouvement alternatif de même période et de déphasage de 90° l'un par rapport au suivant. A chaque piston à double effet 4, correspond par conséquent une première et une seconde chambres 6 et 7 dont le volume varie en fonction du mouvement alternatif du piston. Chacune de ces premières six chambres communique avec la chambre 7 du cylindre suivant par l'intermédiaire d'un circuit traversant successivement une source chaude 8, un échangeur régénérateur 9, et une source froide 10. Cette machine à cycle de Stirling comporte d'autre part une transmission mécanique permettant de transformer les mouvements alternatifs des pistons 4 en un mouvement de rotation de l'arbre central 5. En se reportant au dessin schématique de la figure 1, on distingue les différents éléments mécaniques essentiels constituant une machine conforme à l'invention. Dans le carter 11 de cette machine, sont montés l'arbre tournant 5, les cylindres de travail 12 disposés parallèlement autour de l'arbre, les pistons à double effet 4 disposés dans chacun des cylindres, et la transmission mécanique reliant les pistons à l'arbre tournant. Le carter 11 ménage une première chambre 1 dans laquelle est monté l'arbre tournant 5, et une seconde chambre 2 dans laquelle est montée la transmission mécanique. Cette transmission mécanique est constituée principalement d'un moyeu 13 cylindrique auquel sont reliés rigidement des bras 14 s'étendant radialement. L'extrémité de chaque bras 14 est reliée au piston 4 correspondant par l'intermédiaire d'une liaison articulée 15. Le moyeu 13 est monté rotatif autour de la partie centrale de l'arbre tournant 5, l'axe de rotation du moyeu faisant un certain angle alpha avec l'axe de rotation de l'arbre 5. L'ensemble constitué par le moyeu 13 et les bras 14 constitue par conséquent un plateau oscillant pouvant s'animer d'un mouvement orbital dont l'axe décrit une surface conique autour de l'axe de l'arbre tournant 5. Ce plateau oscillant est toutefois immobilisé en rotation à l'aide d'éléments de guidage appropriés 16, 17. Ces éléments créent la réaction du carter sur l'arbre pour générer le couple moteur. Ces éléments assurent aussi le positionnement correct des extrémités des bras 14 par rapport aux pistons.

La chambre 1 est complètement isolée de la chambre 2 grâce à un joint élastique reliant le moyeu 13 au carter 11. De préférence, comme représenté en figure 1, ce joint élastique est constitué de deux soufflets 18, 19 disposés autour du moyeu 13, l'un des soufflets 18 reliant de façon étanche une extrémité du moyeu 13 et un voile radial 20 relié au carter 11, l'autre soufflet 19 reliant de façon étanche l'autre extrémité du moyeu 13 et un autre voile radial 21 relié au même carter 11.

En disposant ainsi ces joints d'étanchéité 18, 19, on interdit toute communication entre les chambres 1 et 2. De cette façon il devient possible d'avoir, dans la chambre 1, une atmosphère permettant la lubrification des pièces mécaniques en mouvement. On peut, par exemple, envisager la lubrification de tous les paliers intercalés entre le carter 11 et l'arbre tournant 5 ainsi que les paliers intercalés entre le moyeu 13 et la partie centrale de l'arbre 5, tous ces paliers étant disposés à l'intérieur de la chambre 1. La chambre 1 est ainsi complètement isolée du monde extérieur ainsi que de la chambre 2, à la fois par les parois internes du carter 11, par les joints 18 et 19, ainsi que par la paroi interne du moyeu 13. Comme le moyeu 13 ne tourne pas par rapport au carter 11 mais a simplement un mouvement d'oscillation, les soufflets 18 et 19 peuvent être solidement fixés à leur deux extrémités, garantissant ainsi une étanchéité absolue. Comme, d'autre part, l'angle d'oscillation du moyeu 13 est relativement faible, ces soufflets subissent des mouvements de faible amplitude et peuvent ainsi résister lorsque l'arbre 5 tourne à grande vitesse.

Dans ces conditions, on peut être certain que la chambre 2 ne peut recevoir aucune particule souillante telle que du lubrifiant en provenance de la chambre 1.

D'autre part, chaque bras 14 du plateau oscillant est relié à chaque piston à double effet 4 par l'intermédiaire de deux bielles de poussée 15 disposées de part et d'autre du bras 14 et articulées sur lui à l'aide d'une liaison à rotules 22. L'ensemble des bielles 15 et de leur articulation 22 est disposé dans un logement ménagé dans le piston 4 ou dans une pièce liée rigidement à ce piston 4. Il est prévu en outre un joint élastique 23 reliant le bras 14 au piston 4, au niveau du logement, afin que le logement 3 contenant les éléments d'articulation constitue une chambre complètement isolée de la chambre 2. Dans ces conditions, il est possible de disposer dans la chambre 3 une atmosphère lubrifiante facilitant le fonctionnement des éléments d'articulation des bielles et de la rotule, tout en garantissant qu'aucune matière lubrifiante ne puisse passer dans la chambre 2.

La chambre 2 est donc limitée, à la fois par les parois du carter 11, par les joints d'étanchéité 3, les soufflets 18 et 19, les voiles radiaux 20 et 21, ainsi que par la face externe du moyeu 13. Comme l'étanchéité ne peut pas être parfaite entre le piston à double effet 4 et le cylindre 12 dans lequel il se meut alternativement, il est toujours possible qu'une certaine quantité de gaz passe depuis les chambres de travail 6 et 7 vers la chambre 2 et vice versa. Comme, avec les dispositions propres à notre invention, il est possible de garantir une atmosphère parfaitement pure dans la chambre 2, ces fuites au niveau du piston 4 ne présentent aucun danger de souillage du gaz de travail contenu dans les chambres de travail 6 et 7. Il est possible, d'ailleurs, de remplir la chambre 2 d'un gaz de composition identique au gaz de travail. Ainsi, le gaz de travail peut transiter très longtemps à travers les échangeurs de chaleur de la source chaude 8, de l'échangeur régénérateur 9, et de la source froide 10 en garantissant qu'aucune matière grasse ou autre ne vienne se déposer sur les surfaces de ces échangeurs, garantissant ainsi pour une longue période de fonctionnement, une efficacité des échanges thermiques et, par conséquent, le maintien total des performances et du rendement de la machine.

La figure 3 représente une variante de réalisation. Dans cette machine, la cinématique est parfaitement identique à celle décrite précédemment ; on retrouve les mêmes chambres isolées 1, 2 et 3 ; la seule différence résidant dans la disposition du piston à double effet 4. Ce piston à double effet 4 n'est pas disposé de part et d'autre de la liaison articulée 22 mais est disposé d'un seul côté. Du côté opposé au piston 4, se trouve un autre piston 40 relié rigidement au piston 4, mobile alternativement à l'intérieur d'un cylindre 41, et pouvant servir à constituer une pompe. Dans ces conditions, on remarque que cette machine associe à la fois un moteur et une pompe. Bien que l'application d'une telle machine soit différente on retrouve la même disposition des éléments de liaison 15 entre le bras 14 et une pièce liée au piston 4, à l'intérieur d'un même logement 3, on retrouve aussi les mêmes joints 18, 19 et 23 permettant d'isoler complètement la chambre 2.

La figure 4 représente une autre variante de réalisation dans laquelle, comme en figure 3, le piston 4 est disposé d'un seul côté par rapport à la liaison articulée, cette machine étant dépourvue d'un autre piston disposé de l'autre côté de la liaison articulée. On retrouve bien sûr le même logement 3 ménagé dans une pièce liée rigidement au piston à double effet 4, isolé de la chambre 2 grâce à un joint 23 ; on retrouve aussi les mêmes joints 18 et 19 isolant la chambre 1 de la chambre 2. La seule différence réside dans le fait que la liaison entre la pièce liée au piston 4 et le bras 14 est réalisée à l'aide d'une bielle unique 24 pouvant être sollicitée à la fois en compression et en traction et étant reliée par des articulations à la pièce liée au piston 4 et à l'extrémité en forme de rotule du bras 14.

Pour mieux illustrer l'invention, nous avons représenté en figure 5 une disposition constructive particulièrement avantageuse de cette invention. Sur la demi-coupe longitudinale de la figure 5, on distingue le carter de la machine réalisé en deux parties 11, 11', afin de faciliter le montage. Dans ce carter, est monté rotatif un arbre tournant réalisé en deux parties 5, 5' assemblées rigidement, soutenu par deux roulements 25 et 26. Cette machine comporte quatre pistons à double effet disposés parallèlement à l'axe de l'arbre 5, à égale distance de cet axe et à 90° l'un par rapport à l'autre. Chaque piston à double effet est constitué de deux parties 25, 26 assurant l'étanchéité à l'aide de segments, ces parties étant disposées de part et d'autre de la liaison articulée, et étant réunies rigidement par l'intermédiaire d'une partie rigide de liaison 28. La partie 26 du piston disposée du côté de la chambre 6 en communication avec la source chaude est prolongée par une pièce cylindrique 29 à parois minces, formant la tête du piston. L'autre partie 27 du piston est de forme creuse et est obturée par une pièce 30 formant tête du piston du côté de la chambre 7. La partie 26 du piston comporte en outre une pièce 31 en forme de calotte sphérique concave en direction de la liaison articulée, et la pièce 30 fixée à l'intérieur de la partie 27 du piston comporte elle aussi une surface sphérique concave en direction de la liaison articulée. Sur les surfaces sphériques des deux pièces 30 et 31 viennent s'appuyer respectivement deux bielles de poussée 15 et 15'. L'autre extrémité de ces bielles 15 et 15' comporte chacune une face sphérique concave dans laquelle vient se loger une pièce sphérique 32 faite en deux parties montées sur l'extrémité périphérique du bras radial correspondant 14. Le plateau oscillant comprend donc les quatre bras radiaux 14 correspondant aux quatre pistons à double effet, ces bras radiaux étant reliés rigidement au moyeu cylindrique 13 qui entoure la partie centrale de l'arbre tournant 5, avec interposition entre le moyeu 13 et l'arbre 5 de paliers à roulements 33, 34. Le soufflet 18 entoure le moyeu 13, comporte une extrémité reliée rigidement à une extrémité du moyeu 13, et comporte son autre extrémité reliée rigidement à la bordure circulaire d'une pièce annulaire 20 dont la partie périphérique est fixée rigidement sur le carter 11. Le soufflet 19 est monté de façon identique sur le moyeu 13 et relie l'autre extrémité de ce moyeu 13 et le bord d'une pièce 21 disposée symétriquement par rapport à la pièce 20.

Lors du déplacement alternatif du piston à double effet 4, la partie sphérique 32 montée sur l'extrémité du plateau oscillant est animée d'un léger mouvement relatif par rapport aux pistons. Par conséquent, il s'ensuit un léger pivotement des bielles 15 et 15' par rapport à la rotule 32 et par rapport aux pièces correspondantes 31 et 30 liées au piston à double effet. Etant donné la faible amplitude des déplacements relatifs entre les bielles et les pièces 31 et 30, il est prévu que les surfaces en friction correspondante ne soient pas lubrifiées. Pour éviter toute usure, on peut choisir les matériaux de ces pièces de façon que la friction s'effectue, par exemple, entre une surface en acier et une surface en carbone. Par contre, comme le mouvement relatif de la pièce sphérique 32 par rapport aux bielles 15 et 15' est plus important, il est nécessaire de prévoir une lubrification au niveau de ces pièces en mouvement relatif, et, pour cette raison, il est nécessaire de prévoir un dispositif permettant d'éviter tout passage de matière lubrifiante vers la chambre 2. Ce dispositif d'étanchéité est constitué par les deux joints à soufflets 23 et 23', le joint à soufflets 23 reliant de façon étanche la bielle de poussée 15 et une zone périphérique de la pièce sphérique 32 liée au plateau oscillant, l'autre joint à soufflets 23' reliant de façon étanche l'autre bielle de poussée 15' et une zone périphérique de la pièce sphérique 32. De cette façon, on réalise deux chambres 3 et 3′ parfaitement isolées et pouvant être entièrement remplies d'un corps lubrifiant liquide, de préférence incompressible, ou d'une graisse.

L'ensemble des pièces mécaniques 31, 15, 23, 32 ainsi que des pièces 15′, 23′ et 32′ peut être monté à l'intérieur du piston à double effet 4 en introduisant ces pièces par le trou ménagé dans la partie 27 de ce piston, puis en venant ensuite visser la pièce 30 à l'intérieur de cette partie 27 du piston.

En examinant en détail la cinématique résultant de ce montage mécanique, on peut s'apercevoir que, lorsque la rotule 32 est en position longitudinale extrême, il se produit un léger jeu au niveau des bielles de poussée 15 et 15′, mais pour des réalisations pratiques courantes, le calcul peut faire apparaître que la variation de ce jeu liée au fonctionnement cinématique ne dépasse pas quelques centièmes de mm, et est par conséquent parfaitement acceptable.

La cinématique précédemment décrite ne fonctionne correctement que si le plateau oscillant est parfaitement immobilisé en rotation propre tout en pouvant se déplacer librement dans son mouvement oscillant. Ce dispositif d'immobilisation en rotation du plateau oscillant peut être réalisé avantageusement en constituant, autour du moyeu 13, une partie 33 s'étendant radialement vers l'extérieur possédant de chaque côté des encoches 35 pouvant venir s'engager dans des dents correspondantes 34 disposées respectivement sur les deux pièces 20 et 21. En se reportant à la figure 6, qui représente une section développée établie au niveau d'une surface cylindrique passant par A-A étendue approximativement sur un demi-tour de la machine, nous pouvons voir en détail la disposition constructive de la partie 33 du plateau oscillant coopérant respectivement avec les dentures des pièces 20 et 21. On remarque que, suivant cette section A-A, la partie 33 du plateau oscillant présente une forme ondulée constituant de part et d'autre des dentures, et, d'une façon générale, on peut dire que les pièces 20 et 21 possèdent des dentures 34 disposées de façon à former un pignon conique de sommet sensiblement confondu avec le centre 0, et qu'il en est de même pour les dentures situées de part et d'autre de la partie 33 du plateau oscillant. Bien sûr, le nombre de dents du plateau oscillant est égal au nombre de dents 34 des pièces 20 et 21.

## Revendications

1. Machine à cycle de Stirling comprenant essentiellement un carter (11) dans lequel sont montés un arbre tournant (5), au moins trois cylindres de travail (12) disposés parallèlement autour de l'arbre, un piston double effet (4) dans chacun desdits cylindres, et une transmission mécanique transformant le mouvement alternatif des pistons en mouvement de rotation de l'arbre, constituée d'un plateau oscillant (13, 14) immobile en rotation, à mouvement orbital, dont l'axe décrit une surface conique autour de l'arbre tournant, et de liaisons articulées (22, 15) reliant chaque piston au plateau oscillant, caractérisée par le fait que ledit carter (11) de la machine ménage une première chambre (1) dans laquelle est monté l'arbre tournant, et une seconde chambre (2) dans laquelle se trouvent les liaisons articulées reliant chaque piston au plateau oscillant, et par le fait qu'un joint élastique (18, 19) est interposé entre le carter (11) et le plateau oscillant (13, 14) de façon à empêcher toute communication entre la première chambre (1) et la seconde chambre (2), et par le fait que chacune des liaisons articulées (15, 22) est montée dans un logement (3) d'une pièce liée rigidement au piston (4), l'espace contenu dans ce logement (3) étant isolé de la seconde chambre (2) par des joints élastiques (23) reliant le plateau oscillant (14), au voisinage de la liaison correspondante et la pièce reliée au piston correspondant.

2. Machine à cycle de Stirling selon la revendication 1, dont le plateau oscillant présente la forme générale d'un moyeu (13) muni de bras s'étendant radialement (14), le moyeu (13) étant monté rotatif autour de la partie centrale de l'arbre tournant (5), selon un axe de rotation faisant un certain angle par rapport à l'axe de rotation de l'arbre (5), caractérisée par le fait que ledit joint élastique (18, 19) est constitué de deux soufflets disposés autour du moyeu (13), l'un des soufflets (18) reliant de façon étanche l'autre extrémité du moyeu (13) et un autre voile radial (21) relié au carter (11) de la machine.

3. Machine à cycle de Stirling selon l'une des revendications 1 ou 2, caractérisée par le fait que le plateau oscillant est relié à chaque piston (4) par l'intermédiaire de deux bielles de poussée (15) disposées de part et d'autre du plateau oscillant (13, 14) et articulées sur lui à l'aide d'une liaison à rotule (22), et que ledit joint élastique correspondant (23) est constitué de deux soufflets (23, 23′) reliant de façon étanche l'une des bielles (15) avec une zone périphérique de la partie sphérique de la rotule (32) liée au plateau oscillant (14), l'autre soufflet (23′) reliant de façon étanche l'autre bielle (15′) avec une zone périphérique de la partie sphérique de la rotule (32).

4. Machine à cycle de Stirling selon l'une des revendications 2 ou 3, caractérisée par le fait que lesdits voiles radiaux (20, 21) reliés au carter (11) comportant tous deux des dentures périphériques (34) dirigées en direction de l'élargissement radial (33) du plateau oscillant, et que cet élargissement (33) comporte de chaque côté des dentures correspondantes (35) venant s'engrener alternativement sur l'une ou l'autre des dentures (34) des deux voiles radiaux (20 et 21), le nombre de dents de l'élargissement radial (33) du plateau oscillant étant identique au nombre de dents des pièces (20 et 21).

5. Machine à cycle de Stirling selon la revendication 4, caractérisée par le fait que ladite chambre (1), isolée grâce au joint élastique (18, 19), contient une atmosphère permettant la lubrification des paliers (25, 26) disposés entre le carter et l'arbre (5) et des paliers (34, 36) disposés entre le moyeu (13) et l'arbre (5), que ladite chambre (3), isolée grâce au joint (23, 23') contient un lubrifiant liquide incompressible assurant la lubrification des liaisons de la rotule (32), et que ladite chambre (2), isolée des deux autres chambres (1) et (3), contient un gaz dépourvu de tout élément lubrifiant ou souillant et de même nature que le gaz de travail de la machine, cette chambre (2) pouvant recueillir ou alimenter les gaz de fuite passant entre le piston à double effet (4) et les cylindres associés (12) et (12').

## Claims

1. Stirling cycle machine comprising essentially a housing (11), in which are mounted a rotating shaft (5), at least three working cylinders (12) arranged in parallel round the shaft, a double-acting piston (4) in each of the said cylinders and a mechanical transmission which converts the reciprocating movement of the pistons into a rotational movement of the shaft and which consists of a swash plate (13, 14) fixed in terms of rotation, having an orbital movement and with an axis describing a conical surface about the rotating shaft, and of articulated connections (22, 15) connecting each piston to the swash plate, characterised in that the said housing (11) of the machine provides a first chamber (1), in which the rotating shaft is mounted, and a second chamber (2), in which are located the articulated connections connecting each piston to the swash plate, and in that a gaiter (18, 19) is interposed between the housing (11) and the swash plate (13, 14), so as to prevent any communication between the first chamber (1) and the second chamber (2), and in that each of the articulated connections (15, 22) is mounted in a receptacle (3) of a piece connected rigidly to the piston (4), the space contained in this receptacle (3) being isolated from the second chamber (2) by means of gaiters (23) which, in the vicinity of the corresponding connection, connect the swash plate (14) and the piece connected to the corresponding piston.

2. Stirling cycle machine according to Claim 1, the swash plate of which has the general form of a hub (13) provided with radially extending arms (14), the hub (13) being mounted so as to rotate about the central part of the rotating shaft (5) according to an axis of rotation forming a certain angle relative to the axis of rotation of the shaft (5), characterised in that the said gaiter (18, 19) consists of two bellows arranged around the hub (13), one of the bellows (18) connecting in a leak-proof manner the other end of the hub (13) and another radial web (21) connected to the housing (11) of the machine.

3. Stirling cycle machine according to one of Claims 1 or 2, characterised in that the swash plate is connected to each piston (4) by means of two push rods (15) arranged on either side of the swash plate (13, 14) and articulated on the latter by means of a ball-and-socket joint (22), and in that the said corresponding gaiter (23) consists of two bellows (23, 23') which connect in a leak-proof manner one of the push rods (15) to a peripheral zone of the spherical part of the ball-and-socket (32) connected to the swash plate (14), the other bellows (23') connecting the other push rod (15') in a leak-proof manner to a peripheral zone of the spherical part of the ball-and-socket (32).

4. Stirling cycle machine according to one of Claims 2 or 3, characterised in that the said radial webs (20, 21) connected to the housing (11) both possess peripheral sets of teeth (34) directed towards the radially widened portion (33) of the swash plate, and in that this widened portion (33) possesses on each side corresponding sets of teeth (35) which mesh alternately with one or other of the sets of teeth (34) of the two radial webs (20, 21), the number of teeth of the radially widened portion (33) of the swash plate being identical to the number of teeth of the pieces (20 and 21).

5. Stirling cycle machine according to Claim 4, characterised in that the said chamber (1) isolated by means of the gaiter (18, 19) contains an atmosphere which makes it possible to lubricate the bearings (25, 26) arranged between the housing and the shaft (5) and the bearings (34, 36) arranged between the hub (13) and the shaft (5), in that the said chamber (3) isolated by means of the gaiter (23, 23') contains an incompressible liquid lubricant which ensures that the connections of the ball-and-socket (32) are lubricated, and in that the said chamber (2) isolated from the other two chambers (1) and (3) contains a gas free of any lubricating or contaminating element and of the same type as the working gas of the machine, and this chamber (2) can collect or supply the leakage gases passing between the double-acting piston (4) and the associated cylinders (12) and (12').

## Patentansprüche

1. Maschine mit Stirling-Kreislauf mit im wesentlichen folgendem : einem Gehäuse (11), in dem eine sich drehende Welle (5) montiert ist, wenigstens drei Arbeitszylindern (12), die parallel um die Welle angeordnet sind, einem doppelt wirkenden Stellzylinder (4) in jedem Zylinder und einer mechanischen Übertragung, die die hin- und hergehende Bewegung der Kolben in eine Drehbewegung der Welle umwandelt und besteht : aus einer Taumel-Scheibe (13, 14), die drehfest ist, eine Umlaufbahn ausführt und deren Achse eine Kegelfläche um die sich drehende Welle beschreibt, und aus Gelenkverbindungen (22, 15), die jeden Kolben mit der Taumelscheibe verbinden, dadurch gekennzeichnet, daß das Gehäuse (11) der Maschine folgendes bildet : eine erste Kammer (1), in der die sich drehende Welle montiert ist, und eine zweite Kammer (2), in der sich die Gelenkverbindungen befinden, die jeden Kolben mit der Taumelscheibe verbinden, daß zwischen dem Gehäuse (11) und er Taumelscheibe (13, 14) eine elastische Dichtung (18, 19) derart angeordnet ist, daß jede Verbindung zwischen der ersten Kammer (1) und der zweiten Kammer (2) verhindert wird, und daß jede der Gelenkverbindungen (15, 22) in einem Sitz (3) eines mit dem Kolben (4) starr verbundenen Teils montiert ist, wobei der in diesem Sitz (3) enthaltene Raum von der zweiten Kammer (2) durch elastische Dichtungen (23) getrennt ist, die die Taumelscheibe (14) in Nähe der entsprechenden Verbindung und das mit dem entsprechenden Kolben fest verbundene Teil miteinander verbinden.

2. Maschine mit Stirling-Kreislauf nach Anspruch 1, deren Taumelscheibe die allgemeine Form einer Nabe (13) mit radialen Armen (14) hat, wobei die Nabe (13) um das Mittelteil der sich drehenden Welle (5) längs einer Drehachse drehbar gelagert ist, die mit der Drehachse der Welle (5) einen gewissen Winkel einschließt, dadurch gekennzeichnet, daß die elastische Dichtung (18, 19) aus zwei um die Nabe (13) angeordneten Bälgen besteht, wobei der eine (18) der Bälge das andere Ende der Nabe (13) und eine weitere mit dem Gehäuse (11) der Maschine verbundene radiale Abdeckung (21) dicht miteinander verbindet.

3. Maschine mit Stirling-Kreislauf nach einem der Ansprüche 1 oder 2, dadurch gekennzeichnet, daß die Taumelscheibe mit jedem Kolben (4) durch zwei Schubstangen (15) verbunden ist, die beiderseits der Taumelscheibe (13, 14) angeordnet und mit dieser durch eine Kugelgelenkverbindung (22) gelenkig verbunden sind, und daß die entsprechende elastische Dichtung (23) aus zwei Bälgen (23, 23') besteht, die eine der Stangen (15) mit einer Umfangszone des kugelförmigen Teils des mit der Taumelscheibe (15) verbundenen Kugelgelenks (32) dicht verbinden, während der andere Balg (23') die andere Stange (15') mit einer Umfangszone des kugelförmigen Teils des Kugelgelenks (32) dicht verbindet.

4. Maschine mit Stirling-Kreislauf nach einem der Ansprüche 2 oder 3, dadurch gekennzeichnet, daß bei der mit dem Gehäuse (11) verbundenen radialen Abdeckungen (20, 21) Umfangsverzahnungen (34) aufweist, die in Richtung der radialen Erweiterung (23) der Taumelscheibe gerichtet sind, und daß diese Erweiterung (33) auf jeder Seite entsprechende Verzahnungen (35) aufweist, die alternativ in die eine oder die andere der Verzahnungen (34) der beiden radialen Abdeckungen (20 und 21) eingreift, wobei die Zähnezahl der radialen Erweiterung (33) der Taumelscheibe mit der Zähnezahl der Teile (20 und 21) identisch ist.

5. Maschine mit Stirling-Kreislauf nach Anspruch 4, dadurch gekennzeichnet, daß die durch die elastische Dichtung (18, 19) isolierte Kammer (1) eine Atmosphäre enthält, die die Schmierung von Lagern (25, 26) zwischen dem Gehäuse und der Welle (5) und von Lagern (34, 36) zwischen der Nabe (13) und der Welle (5) ermöglicht, daß die durch die Dichtung (23, 23') isolierte Kammer (3) ein inkompressibles flüssiges Schmiermittel enthält, das die Schmierung der Verbindungen des Kugelgelenks (32) gewährleistet, und daß die von beiden anderen Kammern (1) und (3) isolierte Kammer (2) ein Gas enthält, das frei von jeglichem schmierenden oder verunreinigenden Element und von gleicher Art wie das Arbeitsgas der Maschine ist, wobei diese Kammer (2) die zwischen dem doppelt wirkenden Kolben (4) und den zugehörigen Zylindern (12) und (12') strömenden Leckgase sammeln oder liefern kann.

Fig 1

Fig 2

0 097 084

Fig 3

Fig 4

Fig 5

Fig 6